Europäisches Patentamt

European Patent Office

Office européen des brevets

(11) Publication number : **0 458 345 A2**

# (12) EUROPEAN PATENT APPLICATION

(21) Application number : **91108426.7**

(22) Date of filing : **24.05.91**

(51) Int. Cl.⁵ : **B60G 21/02**

(30) Priority : **24.05.90 IT 351790**

(43) Date of publication of application :
**27.11.91 Bulletin 91/48**

(84) Designated Contracting States :
**DE FR GB**

(71) Applicant : **Cervi, Tonino**
**Viale Repubblica, 6**
**I-44012 Bondeno (Ferrara) (IT)**

(72) Inventor : **Cervi, Tonino**
**Viale Repubblica, 6**
**I-44012 Bondeno (Ferrara) (IT)**

(74) Representative : **Modiano, Guido et al**
**MODIANO, JOSIF, PISANTY & STAUB**
**Modiano & Associati Via Meravigli, 16**
**I-20123 Milano (IT)**

(54) Device for compensating roll in motor vehicles.

(57)    The device for compensating roll in motor vehicles comprises two half-bars (11,13) which are transverse or longitudinal with respect to the longitudinal axis of the motor vehicle. Each half-bar (11,13) is provided, at one end, with a crank-like member (14,15) which is connected to the support (16) of a wheel (17,18). A lever (24) is keyed at the opposite end and can be actuated by means of a hydraulic jack (26) which is actuated by means of a distribution unit (32) which is controlled by a centrifugal sensor. When the motor vehicle moves along a curve, the hydraulic (26) is actuated so as to generate on the half-bars (11,13) a moment which is opposite to the torque generated by roll.

Fig. 1

EP 0 458 345 A2

The present invention relates to a device for compensating roll in motor vehicles.

As known, motor vehicle suspensions have transverse or longitudinal torsion bars which have the function of stabilizing the vehicle during curves, increasing the stiffness of the suspensions during roll movements without altering their flexibility in vertical movements.

The effectiveness of torsion bars is the result of various compromises which must take into account the positional variations of the vehicle along curves in order to achieve the best road holding.

In order to compensate roll, hydraulic devices have already been proposed which, along curved paths, act on the arms of the suspensions, raising the vehicle on the outside and lowering it on the inside (see the German publication no. 25 15 679, the European patent no. 190 978, the British publication no. 2 223 718, and the US patent 4,046,211).

Compensation devices which act on the torsion bars are also known (see the German publications no. 39 28 062 and 39 37 674). Said devices, however, have the disadvantage that the compensation effect occurs also during straight paths, causing undesirable recoils when a wheel rises on a bump or descends into a hollow.

The aim of the present invention is to provide a device which can optimize the effectiveness of torsion bars.

This aim is achieved, according to the present invention, by a device as defined in the appended claims.

Further details will become apparent from the detailed description of an embodiment illustrated in the accompanying drawings, wherein:

figure 1 is a plan view of the device according to the invention, applied to an anti-roll system with transverse bars;

figure 2 is an electric diagram with centrifugal operation for controlling the distribution unit;

figure 3 is a schematic view of a detail of the device of figure 1.

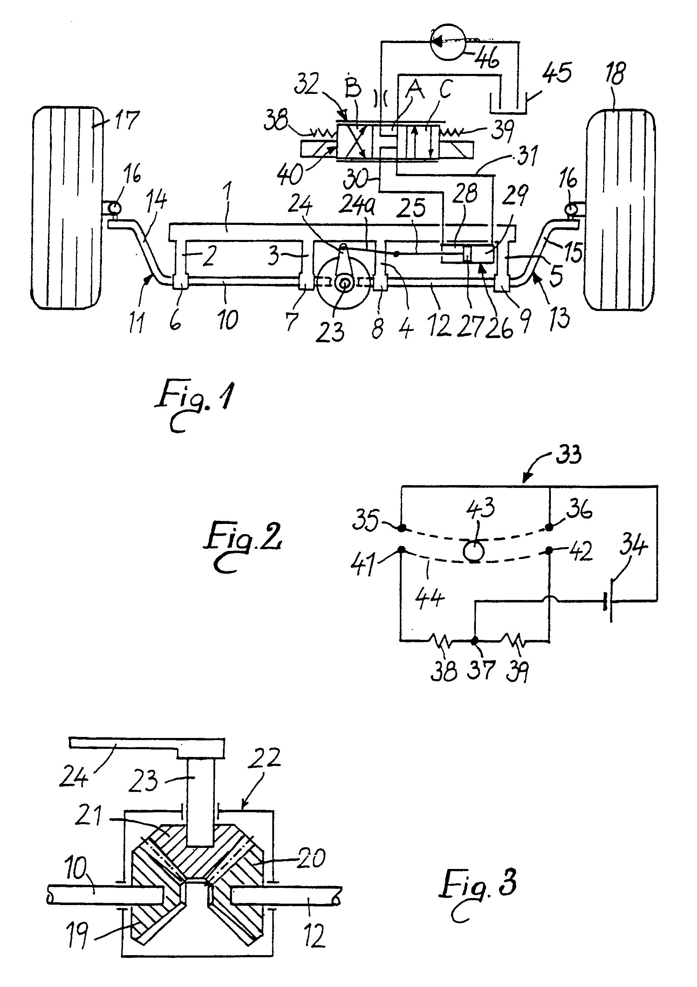

With reference to the above figures 1, 2 and 3, the reference numeral 1 schematically indicates the chassis of a motor vehicle, with which two pairs of arms 2, 3 and 4, 5 are rigidly associated. A sleeve 6-9 is rigidly associated with the ends of each arm 2, 3 and 4, 5.

The sleeves 6, 7 are rotatably traversed by the straight portion 10 of a torsion bar 11, and the sleeves 8, 9 are traversed in the same manner by the straight portion 12 of a second torsion bar 13 which is coaxial to the first bar. The portions 10 and 12 extend toward the sides of the motor vehicle with two crank-like members 14, 15 having ends associated with the supports 16 of two of the wheels 17, 18 which belong to the front or rear axle of the motor vehicle.

Two bevel gears 19, 20 are keyed on the inner ends of the bars 11, 13 and mesh with a third bevel gear or pinion 21, thus forming a sort of differential unit accommodated in a box 22 which is supported on the ends of the half-bars 10, 12.

The pinion 21 is keyed at one end of a shaft 23 which is rotatably supported in the box 22 and with which a radial lever 24 is rigidly associated; said lever 24 is connected, by means of a connecting rod 24a, to the stem 25 of a fluid-dynamic actuator, for example a hydraulic jack 26 mounted on the chassis 1. Advantageously, the ends of the connecting rod 24a are connected to the lever 24 and to the stem 25 of the piston by means of ball joints.

Inside the jack 26, the piston 27 defines two chambers 28, 29 which are connected by means of external ducts 30, 31 to a distribution unit 32 which has three positions A, B and C. The distribution unit 32 is actuated so as to assume one of the three positions A, B, C by a centrifugal sensor which is constituted by an electric circuit illustrated in figure 2, and generally indicated by the reference numeral 33. Said circuit comprises an electric power source 34, constituted for example by the battery of the motor vehicle, which is connected to two contacts 35, 36 with one pole and to a median point 37 with the other pole; the leads of two windings 38, 39 of electromagnets suitable for actuating the slide valve 40 of the distribution unit 32 are connected to said median point.

The opposite leads of the windings 38, 39 are connected to respective contacts 41, 42 which can be connected to the contacts 35, 26 by means of a conducting element 34 which can move by centrifugal force from a median idle position.

The element 43 can be constituted for example by a metallic ball or a mercury bubble guided in a channel 44 which extends in the shape of a downward-convex arc transversely to the longitudinal direction of the motor vehicle. In this manner, depending on the rightward or leftward curve followed by the motor vehicle, the element 43 can mutually connect the contacts 35 and 41 or 36 and 42, causing the energization of the winding 38 or 39 and thus determining the direction of motion of the slide valve 40 of the distribution unit 32.

Said distribution unit 32 is of the four-way, three-position type. When the slide valve 40 is in position A, which is defined as neutral, the chambers 28, 29 of the jack and the delivery of the pump 46 are connected to the discharge 45. In positions B and C, the pump 46 is connected to a chamber 28 or 29, whereas the other chamber 29 or respectively 28 is connected to the discharge 45.

The operation of the described device is as follows. When the motor vehicle moves along a straight path, no variations in the attitude of the chassis 1 occur; said chassis thus remains parallel to the ground. In this case, the mercury bubble 43 maintains an intermediate position between the contacts 35, 41 and 36, 42, and the electromagnets 38, 39, by remaining de-energized, determine the placement of the slide valve 40 in the neutral position A at which the discharge 45 is connected to the chambers 28, 29 of the jack 25.

When the motor vehicle moves along a curve, the ball 43 closes the contacts 35, 41 or 36, 42. The magnet 38 or 39 is thus energized and the slide valve 40 moves correspondingly to one of the positions B or C which allows to send pressurized oil onto the chamber 28 or 29 of the jack.

The jack 26 thus exerts a thrust on the lever 24 which, by means of the differential unit 22, causes the rotation of the half-bars 10 and 12 in opposite directions. Consequently, by means of the cranks 14 and 15, while the suspension of one wheel 17 or 18 rises, the other one tends to be compressed, so as to compensate the roll effect produced by the greater loading of the wheel which follows the outer trajectory of the curve. The extent of the opposite rotations of the half-bars is provided so as to keep the chassis 1 substantially horizontal or even raise it on the outer side with respect to the inner one.

It should be noted that the device does not produce opposite effects along straight paths when a wheel encounters a bump or a hollow. In this case, both wheels in fact perform upward or downward movements which are cushioned by the shock-absorbers.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Device for compensating roll in motor vehicles, characterized in that it comprises two half-bars (11, 13) which have two coaxial portions (10, 12) arranged transversely to the longitudinal axis of the motor vehicle and a crank-shaped end (14, 15) which is associated with the support (16) of a related wheel (17, 18), the ends of said coaxial portions (10, 12) having bevel gears (19, 20) which mesh with a pinion (21) which is keyed on a shaft (23) provided with a radial lever (24) which is connected to a hydraulic cylinder (26), said cylinder being controlled by a distribution unit (32) which is actuated by a centrifugal sensor (33) so as to rotate said bars in directions which are opposite to those generated during roll.

2. Device according to claim 1, characterized in that said distribution unit (32) is of the four-way, three-position type, with a neutral intermediate position and two operative positions, the jack (26) being activated in one direction in one of said operative positions and being activated in the opposite direction in the other operative position.

Fig. 1

Fig. 2

Fig. 3